# EUROPÄISCHE PATENTANMELDUNG

(11) **EP 4 530 824 A1**
(43) Veröffentlichungstag der Anmeldung: **02.04.2025**
(21) Anmeldenummer: 23200504.1
(22) Anmeldetag: 28.09.2023
(51) Int. Cl.: G06F 8/33, G06F 8/34

(54) **VERFAHREN UND VORRICHTUNG ZUR VERWENDUNG GRAPHISCHER INDUSTRIELLER PROGRAMMSTRUKTUREN MIT EINEM SPRACHMODELL**

(71) Anmelder: Siemens Aktiengesellschaft, 80333 München (DE)
(72) Erfinder: Witte, Martin, 91126 Schwabach (DE)
(74) Vertreter: Siemens Patent Attorneys

(57) **Zusammenfassung**

Die Erfindung betrifft ein Verfahren und ein Programmiergerät zur Nutzung eines Systems mit künstlicher Intelligenz mit einem textbasierten Sprachmodell, insbesondere eines generativen vortrainierten Chatbots, zur Verarbeitung zumindest eines graphischen Programmkonstrukts (GP1, GP2) mit einer Anzahl Programmausdrücke in einer graphischen industriellen Programmiersprache, insbesondere Kopplungsplan. Dabei werden zur Eingabe des graphischen Programmkonstrukts (GP1, GP2) in das System die graphischen Programmausdrücke in eine Folge boolescher Programmausdrücke in Textform (TP1) umgesetzt, wobei nicht-boolesche, insbesondere textbasierte, Programmausdrücke (MOVE; CMP) des graphischen Programmkonstrukts (GP1, GP2) jeweils zwischen die benachbarten booleschen Programmausdrücke integriert werden. Somit können Sprachmodelle verwendet werden, um Strukturen von Kontaktplanprogrammen zu erlernen und zu verwenden, insbesondere als Hilfsmittel zur Analyse von Programmkonstrukten und zur KI-basierten Hilfe bei der Erstellung und Weiterentwicklung industrieller Software in der Automatisierungstechnik.

## Beschreibung

Die Erfindung betrifft ein Verfahren zur Nutzung eines Systems mit künstlicher Intelligenz mit einem textbasierten Sprachmodell zur Verarbeitung zumindest eines graphischen Programmkonstrukts gemäß dem Oberbegriff des Patentanspruchs 1, und ein Programmiergerät zur Nutzung eines Systems mit künstlicher Intelligenz mit einem textbasierten Sprachmodell zur Verarbeitung zumindest eines graphischen Programmkonstrukts gemäß dem Oberbegriff des Patentanspruchs 10.

Sprachmodelle, wie sie beispielsweise im Chatbot mit künstlicher Intelligenz ChatGPT des Herstellers OpenAI verwendet werden, benötigen in der Kommunikation zwischen Mensch und Maschine eine Textsprache, um zu funktionieren. Graphische Sprachen sind für sie nicht direkt zugänglich. Die meisten Automatisierungstechniker bevorzugen graphische Sprachen meist nach EN 611131 / IEC 61131, insbesondere Kontaktplandiagramme (KOP) (oft auch engl. "LD" genannt - "ladder diagrams" = "Leiterdiagramme"). Daher können Kontaktpläne, sequentielle Funktionspläne (SFC - sequential funtion charts) und andere graphische Sprachen (z.B. Graph für Ablaufsteuerungen) nicht generiert oder anderweitig von Sprachmodellen unterstützt werden.

Es ist keine Lösung für die Verwendung von Sprachmodellen im Bereich graphischer Sprachen, insbesondere von graphischen Programmiersprachen industrieller Automatisierungskomponenten (z.B. Speicherprogrammierbare Steuerungen - PLC) bekannt. Eine solche Lösung ist jedoch wünschenswert, weil damit die KI-basierten Sprachmodelle beispielsweise zur Weiterentwicklung von bestehenden Automatisierungsprogrammen und somit zur Erstellung oder Verbesserung industrieller Steuerungen für die Automatisierung von Fertigungsanlagen oder in der Prozessindustrie verwendet werden können, wobei zudem ein Software-Entwickler weiter mit den ihm vertrauten Sprachen und Entwicklungswerkzeugen arbeiten kann.

Es ist folglich eine Aufgabe der vorliegenden Erfindung, Mittel vorzuschlagen, um Konstrukte graphisch basierter Programmiersprachen insbesondere aus der industriellen Automatisierungstechnik zur Interaktion mit KI-basierten Sprachmodellen zu verwenden.

Eine Lösung des Problems bedingt, dass die graphische Sprache muss in ein Textformat umgewandelt wird. Das Textformat muss einige Merkmale aufweisen, um interpretierbar zu sein:
- So kompakt und gut lesbar wie möglich sein.
- Keine semantisch unnötigen Sprachbestandteile, die nichts mit der Domäne zu tun haben (wie z.B. XML-Darstellungen von KOP in Engineering-Systemen).
- Für den Menschen verständlich, um das Ergebnis zu überprüfen.
- Keine Zeichen enthalten, die schwer zu interpretieren sind.
- Generierte textuelle Darstellungen müssen wieder in die ursprüngliche graphische Form umgewandelt werden können.

Die Ausgabe wird durch ein Verfahren nach Patentanspruch 1 und durch ein Programmiergerät nach Patentanspruch 10 gelöst.

Dabei wird ein Verfahren zur Nutzung eines Systems mit künstlicher Intelligenz mit einem natürlichsprachigen textbasierten Sprachmodell, insbesondere eines generativen vor-trainierten Chatbots, zur Verarbeitung zumindest eines graphischen Programmkonstrukts mit einer Anzahl Programmausdrücke in einer graphischen industriellen Programmiersprache, insbesondere Kopplungsplan, vorgeschlagen. Dabei werden im Zuge der Eingabe des graphischen Programmkonstrukts in das System die graphischen Programmausdrücke in eine Folge boolescher Programmausdrücke in Textform umgesetzt werden, wobei nicht-boolesche (z.B. textbasierte) Programmausdrücke des graphischen Programmkonstrukts jeweils zwischen die benachbarten booleschen Programm-ausdrücke integriert werden. Somit können Sprachmodelle verwendet werden, um Strukturen von Kontaktplanprogrammen zu erlernen und zu verwenden, insbesondere als Hilfsmittel zur Analyse von Programmkonstrukten und zur KI-basierten Hilfe bei der Erstellung und Weiterentwicklung industrieller Software in der Automatisierungstechnik.

Die Aufgabe wird außerdem durch Programmiergerät zur Nutzung eines Systems mit künstlicher Intelligenz mit einem natürlichsprachigen textbasierten Sprachmodell, insbesondere eines generativen vortrainierten Chatbots, zur Verarbeitung zumindest eines graphischen Programmkonstrukts mit einer Anzahl Programmausdrücke in einer graphischen industriellen Programmiersprache, insbesondere Kopplungsplan, gelöst. Dabei ist das Programmiergerät mittels einer Umsetzungssoftware zur Ausführung des vorstehend beschriebenen Verfahrens eingerichtet. Damit lassen sich die bereits anhand des Verfahrens diskutierten Vorteile erzielen.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für das erfindungsgemäße Programmiergerät. Vorteilhafte Varianten können sowohl einzeln, als auch in sinnfälliger Kombination miteinander realisiert werden.

Besonders vorteilhaft kann das Verfahren eingesetzt werden, wenn das graphisch basierte Programm Konstrukt nicht nur zum Trainieren, sondern zur Generierung eine Antwortnachricht an das System mit der künstlichen Intelligenz übermittelt wird, wobei die Antwortnachricht dann textbasierte Programmkonstrukte zurückgeliefert, die dann zur Programmierung einer industriellen Automatisierungsanordnung und damit zur Steuerung einer industriellen Automatisierung oder eines industriellen Prozesses verwendet werden. Dazu wird vorteilhaft ein aus textbasierten Programmausdrücken bestehendes Antwort-Programmkonstrukt des Systems in ein graphisches Antwort-Programmkonstrukt umgesetzt ("Rückumsetzung") und dieses zur Programmierung einer industriellen Automatisierungsanordnung und zur Steuerung eines industriellen Prozesses oder einer industriellen Produktion verwendet.

In vielen praktischen Anwendungsfällen ist der nicht-boolesche textbasierte Programmausdruck des graphischen Programmkonstrukts ein Funktionsbaustein mit mehreren Eingangsvariablen und/oder mehreren Ausgangsvariablen. Dabei kann vorteilhaft im Falle mehrerer nicht-boolescher Eingangsvariablen des nicht-booleschen textbasierten Programmausdrucks diese als Parameter im erzeugten textbasierten Programmkonstrukt definiert und als Verknüpfung umgesetzt werden, vorzugsweise als Join. Im Falle mehrerer nicht-boolescher Ausgangsvariablen des nicht-booleschen textbasierten Programmausdrucks können diese als Ausgangswerte im erzeugten textbasierten Programmkonstrukt definiert und als Verzweigung umgesetzt werden, vorzugsweise als Fork oder als logisches Oder ("or").

In einer vorteilhaften Ausgestaltung wird das Sprachmodell mit Datensätzen mit nicht-standardisierten Funktionsbausteinen, vorzugsweise mit nicht-booleschen textbasierten Programmausdrücken, vortrainiert. Damit lässt sich das Sprachmodell zur Verarbeitung nicht-standardisierter Syntax trainieren, um diese aus den graphischen Programmkonstrukten passend zu extrahieren. Weiter werden vorteilhaft zum Training die nicht-booleschen Ein- und/oder Ausgangsvariablen jeweils mit Standardnamen bezeichnet, um die Extrahierung dieser Programmausdrücke bzw. -elemente zu verbessern.

Zur Rückumsetzung des textbasierten Antwort-Programmkonstruktes in das graphische Antwort-Programmkonstrukt wird vorteilhaft ein Infix-Ausdruck in einen Postfix-Ausdruck umgewandelt, wobei ein stapelbasierter Konvertierungsalgorithmus verwendet wird. Weiter werden vorteilhaft bei der Rückumsetzung Klammern und Nicht-Operatoren vor Klammern, die in der graphischen industriellen Programmiersprache nicht dargestellt werden können, entfernt.

Ein Ausführungsbeispiel des erfindungsgemäßen Verfahrens wird nachfolgend anhand der Zeichnungen erläutert. Ist dient gleichzeitig der Erläuterung einer erfindungsgemäßen Vorrichtung, also eines erfindungsgemäßen Programmiergerätes.

Dabei zeigen:
- Figur 1: die Umsetzung eines graphischen Programmkonstruktes in einen booleschen Ausdruck (Textform),
- Figur 2: die Umsetzung eines weiteren Programmkonstruktes mit einem eingebetteten Funktionsblock in eine komprimierte und danach in eine erweiterte Textform, und
- Figur 3: die Umsetzung eines Infix-Ausdruckes in einen Postfix-Ausdruck und danach in einen Graphen und eine KOP-Notierung.

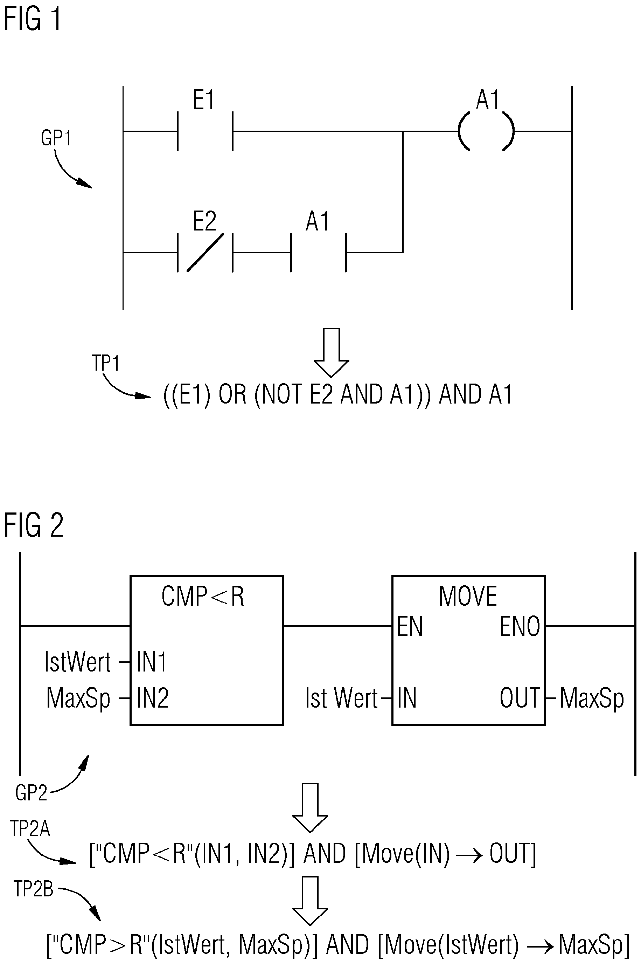

Mathematisch gesehen sind Kontaktpläne und andere graphische Programmkonstrukte der Norm IEC 61131-3 boolesche Formeln, die als Diagramme dargestellt werden - siehe beispielsweise das graphische Programmkonstrukt GP1 in Figur 1 oben. Eine Folge von Objekten, die durch Linien verbunden sind, ist eine Folge von logischen UND-Ausdrücken. Eine Verzweigung ist ein nicht exklusives ODER ihrer Verzweigungen, beginnend mit AND und einer offenen eckigen Klammer. Eine Verknüpfung erzeugt eine geschlossene Klammer. Die Negation existiert nur für einzelne Verbindungen, nicht für einen vollständigen Teilgraphen. Vor allen Startlinien (Kanten) wird ein virtueller Knoten generiert, der sich zu den Startlinien verzweigt.

Es sind mehrere unterschiedliche graphische Programmkonstrukte ("LDs"; KOP-Elemente) für ein- und dieselbe Formel (z.B. boolescher Ausdruck) möglich, und umgekehrt gibt es mehrere Formeln, die dieselbe boolesche Funktion darstellen. Daher soll die Formel auf eine kanonische Form reduziert werden, z.B. indem man sie erweitert und dadurch die Klammern entfernt.

Ein Knoten im Graphen ist entweder ein Standard-KOP-Element (z.B. Flip-Flop, Negation), das direkt in einen booleschen Ausdruck umgewandelt und in die Formel eingefügt werden kann, oder ein Funktionsbaustein mit einigen booleschen Ein- und Ausgängen sowie anderen Ein- und Ausgängen, die typischerweise mit Datenpunkten (z.B. Register oder Variablen) verbunden sind. Solche Funktionsbausteine (kurz: FB) sind durch ein Sonderzeichen gekennzeichnet, z.B. ["TYPE_DATAPLACE_FB"] für FB mit dem Namen "TYPE_DATAPLACE_FB".

Die Interna eines solchen FB sind unbekannt ("Blackbox"), daher wendet man zwei Regeln an: Wenn mehrere boolesche Eingaben vorhanden sind, fungiert er als "Join" (es wird eine geschlossene Klammer erzeugt); wenn mehrere Ausgänge vorhanden sind, verhält es sich wie ein "Fork" (ein OR wird generiert). Die nicht-booleschen Eingänge werden als Parameter des Funktionsbausteins (FB) geschrieben, die nicht-booleschen Ausgänge mit einem Ausgangszeichen, z.B.:
["TYPE_DATAPLACE_FB" (x1, x2)□(y1, y2)] .

Wenn das Sprachmodell "gegen" einen Automatisierungsstandard trainiert wird, bei dem Standard-Funktionsbausteine ("Standard-FBs") verwendet werden, ist der Name der verwendeten FBs wie oben zu verwenden. Wenn das Sprachmodell auf verschiedenen Datensätzen mit nicht standardisierten Funktionsbausteinen trainiert wird, werden die Funktionsbausteinnamen auf einen gebräuchlichen Namen reduziert, z.B. "FB". Dadurch wird das Sprachmodell darauf beschränkt, nur die Struktur zu lernen. Wenn die (nicht-booleschen) Ein- und Ausgabevariablen einen Standardnamen haben, schränkt dies das Sprachmodell wiederum ein, die Struktur anstelle des konkreten Szenarios zu lernen.

Ein erstes Beispiel ist in Figur 1 gezeigt, wo das graphische Programmkonstrukt GP1 (im oberen Teil) in das textbasierte Programmkonstrukt TP1 (unten) konvertiert wird.

Bei Verwendung von Funktionsbausteinen (FB) können diese Programmelemente im Sinne einer "Blackbox" in das textbasierte Programmkonstrukt TP2A, TP2B übernommen werden und von der KI als Block mit definierten Ein- und Ausgängen behandelt werden. Die Figur 2 zeigt das an einem zweiten Beispiel mit einer Konvertierung einer Vergleichsoperation ("CMP" - compare) und einer Umsetzung ("MOVE"), wobei im zweiten Konvertierungsschritt die angeknüpften Variablen IN1, IN2 aufgelöst (erweitert) sind (IstWert, MaxSp).

Zu beachten ist, dass der zweite Fall weniger generisch und für das Trainieren der Sprachmodelle weniger nützlich ist, es sei denn, die Variablennamen sind standardisiert.

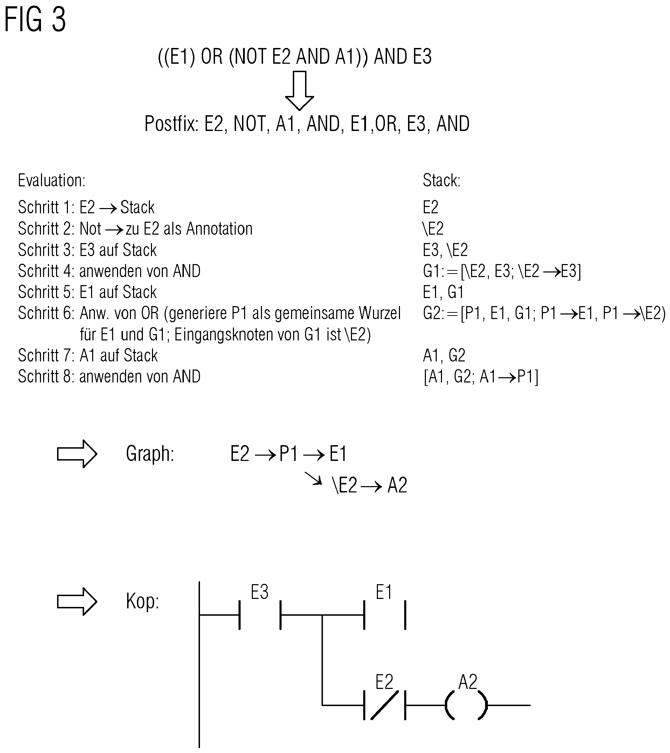

Um eine von der Sprach-Engine generierte Formel wieder in einen graphischen Ausdruck bzw. ein graphisches Programmkonstrukt (z.B. KOP) umzuwandeln, wird der Infix-Ausdruck (Figur 3 oben) in einen Postfix-Ausdruck umgewandelt, wobei der bekannte stapelbasierte Konvertierungsalgorithmus verwendet wird. Dadurch werden die Klammern und Nicht-Operatoren vor Klammern, die in LD ("Ladder Diagram"; Kopplungsplan) nicht dargestellt werden können, entfernt. Zum Schluss wird das Postfix in einen LD-Graphen umgewandelt. Dies ist in Figur 3 dargestellt.

Gegeben ist ein Postfix Ausdruck (Figur 3, 2. Zeile), in dem die Einträge entweder
- die Operanden, die Ein/Ausgabevariablen oder einen Funktionsblock mit den relevanten boolschen Ein/Ausgabestellen darstellen, oder
- die Operatoren (logisches "und", "nichtexklusives oder" sowie "negation" als unitärer operator).

Ziel ist die Erzeugung eines gerichteten Graphen, der den KOP ("Kopplungsplan") darstellt (ein KOP ist ein azyklischer gerichteter Graph) Mit einem Ausdruck X->Y wird jeweils eine direkte Verbindung von X nach Y bezeichnet.

Es wird ein Stack (Stapelspeicherstruktur) definiert, der Teilgraphen speichert. Wie üblich werden die Operanden von links dem Postfix Ausdruck entnommen. Ist der Ausdruck ein Operand, wird er auf dem Stack gelegt, dabei wird er als Teilgraph interpretiert, der nur einen Knoten hat. Ist er ein Operator, wird dieser auf die obersten Elemente (Teilgraphen) des Stacks angewendet und das Resultat, das ein neuer Teilgraph ist, wird auf den Stack gelegt. Der Teilgraph wird wie folgt erzeugt:
1. Für einen Operator "und" werden der vorletzte und letzte Teilgraph des Stacks mit einer gerichteten Kante (Linie) verbunden, wobei der vorletzte den Ausgangsknoten und der letzte der Eingangsknoten bereitstellt, die aufgrund der Konstruktion eindeutig ist:
   A
   B
      "und"
   wird zu "b --> a" für b = Endknoten von Graph B und a = Anfangsknoten von Graph A .
2. Für einen Operator "oder" wird ein Pseudo-Knoten erzeugt, der die beiden obersten Graphen A und B des Stacks verbindet; der resultierende Graph wird auf dem Stack gespeichert:
   A
   B
      "oder"
   wird zu 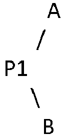
3. Für einen Operator "negation" wird das oberste Stackelement als negiert annotiert. Das Element ist aufgrund der Konstruktion immer ein einzelner Knoten.

Die Generierung eines KOP aus dem gerichteten Graphen ist trivial. Die Ursprungsknoten werden links mit der senkrechten Startlinie des KOB verbunden, Dann wird der Graph nach rechts bzw. unten in der Richtung der Kanten aufgebaut. Zu beachten ist, dass die Kantenrichtung die Reihenfolge der Auswertung des KOP beschreibt. Dies ist in der Figur 3 unten dargestellt.

Sprachmodelle können somit verwendet werden, um Strukturen von Kontaktplanprogrammen zu erlernen. Das Vokabular ist minimiert und man kann die Detaillierung der gelernten Programme durch das Integrieren oder Weglassen von Funktions- und Variablennamen steuern. Prinzipiell kann das Verfahren auf signalflussbasierte Programme ausgeweitet werden, wobei anstelle boolescher Ausdrücke beliebige Variablen mit der Logik verknüpft werden können. Insbesondere können Sprachmodelle verwendet werden, um in einem Programmiergerät für industrielle Automatisierungskomponenten Strukturen von Kontaktplanprogrammen zu erlernen und zu verwenden, insbesondere als Hilfsmittel zur Analyse von Programmkonstrukten und zur KI-basierten Hilfe bei der Erstellung und Weiterentwicklung industrieller Software in der Automatisierungstechnik.

## Patentansprüche

1. Verfahren zur Nutzung eines Systems mit künstlicher Intelligenz mit einem textbasierten Sprachmodell, insbesondere eines generativen vortrainierten Chatbots, zur Verarbeitung zumindest eines graphischen Programmkonstrukts (GP1, GP2) mit einer Anzahl Programmausdrücke in einer graphischen industriellen Programmiersprache, insbesondere Kopplungsplan,
**dadurch gekennzeichnet,**
**dass** zur Eingabe des graphischen Programmkonstrukts (GP1, GP2) in das System die graphischen Programmausdrücke in eine Folge boolescher Programmausdrücke in Textform (TP1) umgesetzt werden, wobei nicht-boolesche, insbesondere textbasierte, Programmausdrücke (MOVE; CMP) des graphischen Programmkonstrukts (GP1, GP2) jeweils zwischen die benachbarten booleschen Programmausdrücke integriert werden.

2. Verfahren nach Patentanspruch 1,
**dadurch gekennzeichnet,**
**dass** ein aus textbasierten Programmausdrücken bestehendes Antwort-Programmkonstrukt des Systems in ein graphisches Antwort-Programmkonstrukt umgesetzt und dieses zur Programmierung einer industriellen Automatisierungsanordnung und zur Steuerung eines industriellen Prozesses oder einer industriellen Produktion verwendet wird.

3. Verfahren nach Patentanspruch 1 oder 2,
**dadurch gekennzeichnet,**
**dass** der nicht-boolesche textbasierte Programmausdruck (MOVE; CMP) des graphischen Programmkonstrukts (GP1, GP2) ein Funktionsbaustein mit mehreren Eingangsvariablen und/oder mehreren Ausgangsvariablen ist.

4. Verfahren nach Patentanspruch 3,
**dadurch gekennzeichnet,**
**dass** im Falle mehrerer nicht-boolescher Eingangsvariablen des nicht-booleschen textbasierten Programmausdrucks (GP2) diese als Parameter im erzeugten textbasierten Programmkonstrukt (TP2A, TP2B) definiert und als Verknüpfung umgesetzt werden, vorzugsweise als Join.

5. Verfahren nach Patentanspruch 3 oder 4,
**dadurch gekennzeichnet,**
**dass** im Falle mehrerer nicht-boolescher Ausgangsvariablen des nicht-booleschen textbasierten Programmausdrucks diese als Ausgangswerte im erzeugten textbasierten Programmkonstrukt definiert und als Verzweigung umgesetzt werden, vorzugsweise als Fork oder als logisches Oder.

6. Verfahren nach einem der vorhergehenden Patentansprüche,
**dadurch gekennzeichnet,**
**dass** das Sprachmodell mit Datensätzen mit nicht-standardisierten Funktionsbausteinen, vorzugsweise mit nicht-booleschen textbasierten Programmausdrücken, vortrainiert wird.

7. Verfahren nach einem der Patentansprüche 3 bis 6,
**dadurch gekennzeichnet,**
**dass** zum Training die nicht-booleschen Ein- und/oder Ausgangsvariablen jeweils mit Standardnamen bezeichnet werden.

8. Verfahren nach einem der Patentansprüche 2 - 7,
**dadurch gekennzeichnet**,
zur Rückumsetzung des textbasierten Antwort-Programmkonstruktes in das graphische Antwort-Programmkonstrukt ein Infix-Ausdruck in einen Postfix-Ausdruck umgewandelt wird, wobei ein stapelbasierter Konvertierungsalgorithmus verwendet wird.

9. Verfahren nach Patentanspruch 8,
**dadurch gekennzeichnet,**
**dass** bei der Rückumsetzung Klammern und Nicht-Operatoren vor Klammern, die in der graphischen industriellen Programmiersprache nicht dargestellt werden können, entfernt werden.

10. Programmiergerät zur Nutzung eines Systems mit künstlicher Intelligenz mit einem natürlichsprachigen textbasierten Sprachmodell, insbesondere eines generativen vortrainierten Chatbots, zur Verarbeitung zumindest eines graphischen Programmkonstrukts (GP1, GP2) mit einer Anzahl Programmausdrücke in einer graphischen industriellen Programmiersprache, insbesondere Kopplungsplan, **dadurch gekennzeichnet,**
**dass** das Programmiergerät mittels einer Umsetzungssoftware zur Ausführung des Verfahrens nach Patentanspruchs 1 eingerichtet ist.
